(19) **Europäisches Patentamt**

**European Patent Office**

**Office européen des brevets**

(11) **EP 0 832 025 B1**

(12) **EUROPÄISCHE PATENTSCHRIFT**

(45) Veröffentlichungstag und Bekanntmachung des Hinweises auf die Patenterteilung:
**15.09.1999 Patentblatt 1999/37**

(21) Anmeldenummer: **96918683.2**

(22) Anmeldetag: **11.06.1996**

(51) Int. Cl.$^6$: **B62D 11/10**

(86) Internationale Anmeldenummer:
**PCT/EP96/02524**

(87) Internationale Veröffentlichungsnummer:
**WO 97/00190 (03.01.1997 Gazette 1997/02)**

(54) **ELEKTRO-MECHANISCHES ÜBERLAGERUNGSLENKGETRIEBE FÜR EIN KETTENFAHRZEUG**

ELECTROMECHANICAL CROSS-DRIVE STEERING TRANSMISSION FOR TRACKLAYING VEHICLES

MECANISME ELECTROMECANIQUE DE DIRECTION A SUPERPOSITION POUR UN VEHICULE A CHENILLES

(84) Benannte Vertragsstaaten:
**DE FR GB**

(30) Priorität: **16.06.1995 DE 19521795**

(43) Veröffentlichungstag der Anmeldung:
**01.04.1998 Patentblatt 1998/14**

(73) Patentinhaber:
**ZF FRIEDRICHSHAFEN Aktiengesellschaft**
**88038 Friedrichshafen (DE)**

(72) Erfinder:
- **LOICHINGER, Walter**
  **D-88045 Friedrichshafen (DE)**
- **SORG, Johannes**
  **D-88213 Ravensburg (DE)**

(74) Vertreter: **Zietlow, Karl-Peter**
**ZF FRIEDRICHSHAFEN AG**
**88038 Friedrichshafen (DE)**

(56) Entgegenhaltungen:
DE-A- 3 619 055          DE-A- 4 341 202
DE-B- 1 176 002

Anmerkung:    Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Überlagerungslenkgetriebe für ein Kettenfahrzeug, insbesondere ein Überlagerungslenkgetriebe mit mehreren festen Übersetzungen.

Zur Steuerung von Kettenfahrzeugen wird eine Geschwindigkeitsdifferenz der beiden Antriebsketten erzeugt, wodurch sich ein Kurvenradius einstellt, bei dem das Verhältnis des inneren Radius zum äußeren Radius dem Geschwindigkeitsverhältnis der inneren zur äußeren Kette entspricht. Zur Erzeugung dieser Geschwindigkeitsdifferenz werden Überlagerungslenkgetriebe benutzt, die dem eigentlichen Vortrieb die gewünschte Geschwindigkeitsdifferenz zwischen rechter und linker Kette überlagern.

Die heute bekannten Überlagerungslenkgetriebe für Kettenfahrzeuge lassen sich in die zwei Kategorien einteilen:

a) mechanische Lenkgetriebe mit festen Übersetzungen, die teilweise zusätzlich über einen kleinen, stufenlosen Bereich für große Radien verfügen und

b) hydrostatische oder hydrodynamische Lenkgetriebebauformen, die über den gesamten oder zumindest einen großen Bereich stufenlos arbeiten.

Die mechanischen Lenkgetriebe zeichnen sich vorteilhaft durch geringe Kosten, hohen Wirkungsgrad, einfachen Aufbau und kleine Reaktionszeiten aus, haben jedoch den Nachteil, keinen oder nur einen sehr geringen stufenlosen Bereich zu besitzen, was zu hohen Anforderungen an den Fahrer führt und relativ aufwendige Absicherungen gegen Drehmomentüberlastungen erfordert.

Die hydrostatischen oder -dynamischen Lenkgetriebe stellen aufgrund ihres großen stufenlosen Lenkbereichs nur geringe Anforderungen an den Fahrer und sind einfach gegen Drehmomentüberlastungen absicherbar, während sie durch den komplexen Aufbau hohe Kosten erzeugen, einen niedrigeren Wirkungsgrad und längere Reaktionszeiten besitzen.

Aus der DE-A 36 19 055 ist ein mechanisches Überlagerungslenkgetriebe mit drei Radienbereichen bekannt. Dieses Getriebe setzt sich aus einem hydrostatischen und einem mechanischen Teilgetriebe zusammen. Eine Null-Welle des Lenkgetriebes wirkt mit Summierungsgetrieben des Grundgetriebes zusammen. In einem ersten Radienbereich ist ausschließlich das hydrostatische Teilgetriebe, in einem zweiten Radienbereich zusätzlich das mechanische Teilgetriebe und in einem dritten, festen Radius ist ausschließlich das mechanische Teilgetriebe wirksam.

Aus der DE-B-11 76 002 ist ein überlagerungsgetriebe zur Lenkung mit zwei übersetzungen gemäß dem Öberbegriff des Anspruches 1 bekannt wobei, bei Eingabe eines gewünschten Lenkradius, die Soll-Kurve in gerade und bogenförmige Teilstücke durch einen Impulsgeber zerlegt wird.

Aufgabe der Erfindung ist es, ein mechanisches Überlagerungslenkgetriebe so fortzuentwickeln, daß einerseits die oben beschriebenen Vorteile erhalten bleiben, andererseits jedoch ein großer stufenloser Lenkbereich entsteht.

Die Aufgabe wird durch die Merkmale des Anspruches 1 gelöst.

Demgemäß wird ein an sich konventionell aufgebautes, mechanisches Lenkgetriebe genutzt, das mit einer automatischen Lenkradienumschaltung und einer Steuerung versehen wird, wobei entsprechend der Lenkradiusvorgabe des Fahrers automatisch durch die Steuerung derart zwischen den bestehenden festen Lenkradien umgeschaltet wird, daß der gewünschte Bogen (mit entsprechendem Radius) durch eine Vielzahl von Bogensegmenten (mit festen Radien) angenähert wird.

Die Erfindung ist anhand eines Beispiels mit einem mechanischen Drei-Radien-Lenkgetriebe in den Figuren näher beschrieben. Darin ist im übrigen folgendes dargestellt. Es zeigt:

Fig. 1          Räderschema Lenkgetriebe;

Fig. 2          Schema Kettenfahrzeuggetriebe;

Fig. 3          Hydraulikschema;

Fig. 4          Funktionsdiagramm;

Fig. 5          Lenkradius = f (Drehwinkel am Lenkrad);

Fig. 6          Übergang digitaler/analoger Bereich;

Fig. 7          Aufteilung Lenkwinkel;

2

Fig. 8 und 9      Lenkstrategie;

Fig. 10         Kurvenfahrt;

Fig. 11         Lenkstrategie;

Fig. 12         Abschaltbedingungen Lenkgetriebe und

Fig. 13         "Reset"-Bedingung Lenkgetriebeabsicherung.

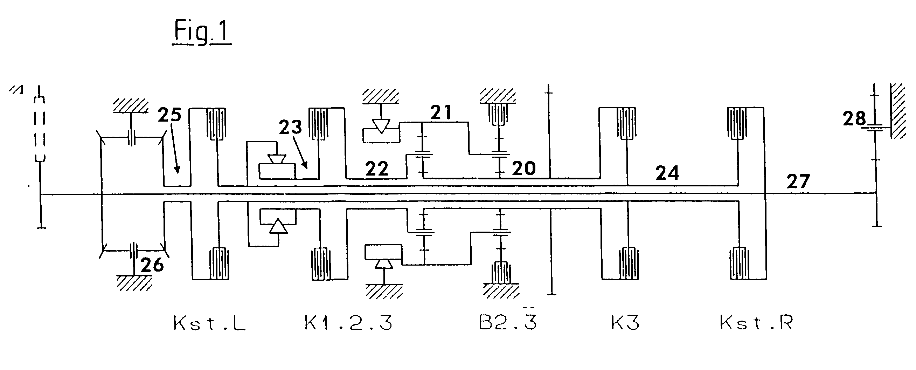

Fig. 1 zeigt ein Räderschema des beispielhaften Lenkgetriebes. Das Lenkgetriebe besteht im wesentlichen aus einem konventionellen, primär angetriebenen Drei-Radien-Lenkgetriebe mit drei festen Radienübersetzungen sowie einem stufenlosen Radienbereich für große Lenkradien. Der stufenlose Radienbereich wird durch gezielten Schlupf in der Kupplung KR1/2/3 erreicht und über einen mechanisch betätigter, hydraulischen Lenksteuerschieber angesteuert.

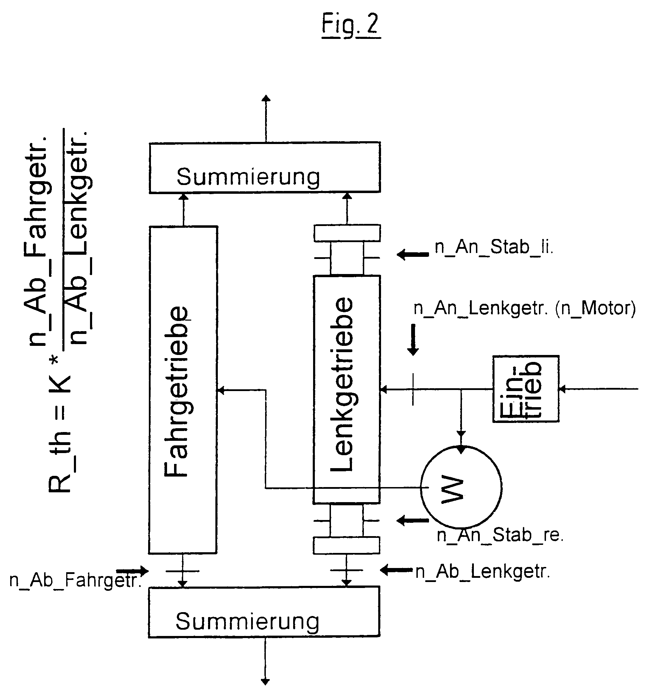

Fig. 2 zeigt das Schema des Kettenfahrzeuggetriebes. Dieses Lenkgetriebe ist durch je einen Drehzahlsensor am Lenkgetriebeeingang, an der Eingangswelle für die Stabilisierungskupplungen links und rechts sowie am Lenkgetriebeabtrieb für die Messung der entsprechenden Drehzahlen erweitert worden.

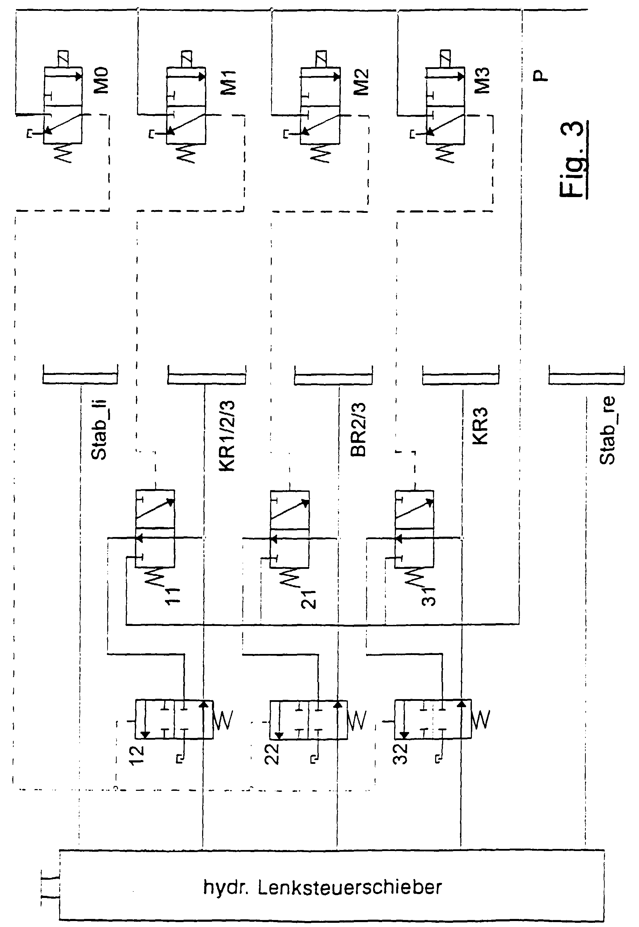

Fig. 3 zeigt das Hydraulikschema, das auf dem System basiert. Die Ansteuerung der Lenkgetriebekupplungen KR1/2/3 und KR3 bzw. der Bremse BR2/3 ist um die Magnetventile M0, M1, M2 und M3 sowie um die Steuerventile Nr. 11, 21, 31, 12, 22, 32 erweitert worden. Auf der Betätigungswelle für den Lenkstellungsgeber ist getriebefest ein Drehwinkelgeber für die Messung des Lenkradwinkels (Fahrerwunsch) installiert.

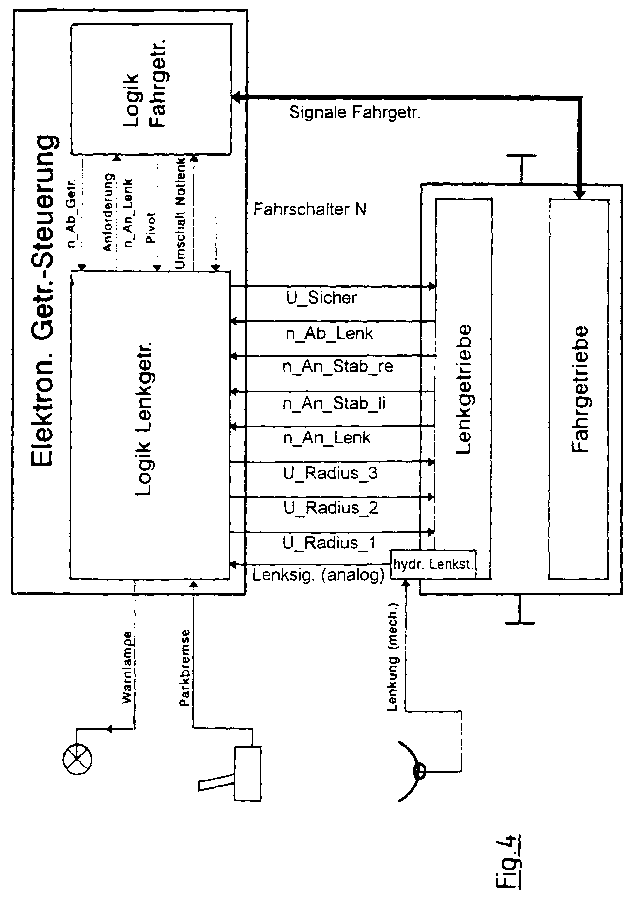

Fig. 4 zeigt das Funktionsdiagramm der elektronischen Getriebesteuerung. Dies ist gegenüber dem System hard- und softwaremäßig um den Funktionsumfang "Logik-Lenkgetriebe" erweitert. Die dazugehörige Hardware hat die Aufgabe, die vom Lenkgetriebe bzw. von der Peripherie und von der "Logik-Fahrgetriebe" kommenden elektrischen Eingangssignale für die Software aufzubereiten sowie die Ausgangssignale für das Lenkgetriebe, die Peripherie und die "Logik-Fahrgetriebe" zu generieren.

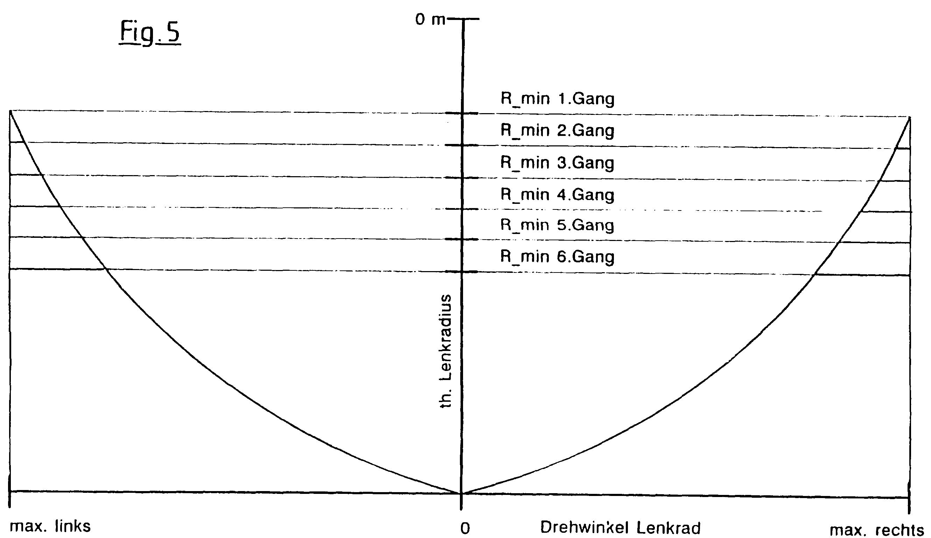

Fig. 5 zeigt den Funktionszusammenhang zwischen dem Drehwinkel am Lenkrad und dem Lenkradius. Über den Drehwinkelgeber auf der Betätigungswelle des Lenksteuerschiebers wird der elektronischen Steuerung kontinuierlich der Sollkurvenradius des Fahrers übermittelt. Aus dieser Information wird die Lage des Sollkurvenradius zu den vom Lenkgetriebe zur Verfügung gestellten Festradien berechnet und damit die Steuerungsstrategie bestimmt.

Im folgenden werden die unterschiedlichen Lenkzustände beschrieben:

Geradeauslauf

Für den Geradeauslauf werden die Stabilisierungskupplungen Stab_li und Stab_re (Fig. 3) durch den hydraulischen Lenksteuerschieber angesteuert. Dadurch wird eine Geradeausfahrt selbst bei unterschiedlichen Fahrwiderständen erzwungen. Zur Sicherstellung einer schnellen Lenkreaktion wird ebenfalls die Kupplung KR1/2/3 über das Magnetventil M1 und das Ventil 11 mit einer entsprechenden Pulsbreite pulsweitenmoduliert, so daß sich ein Druck von ca. 0,8 bis 1,0 bar einstellt.

Analoger stufenloser Lenkbereich

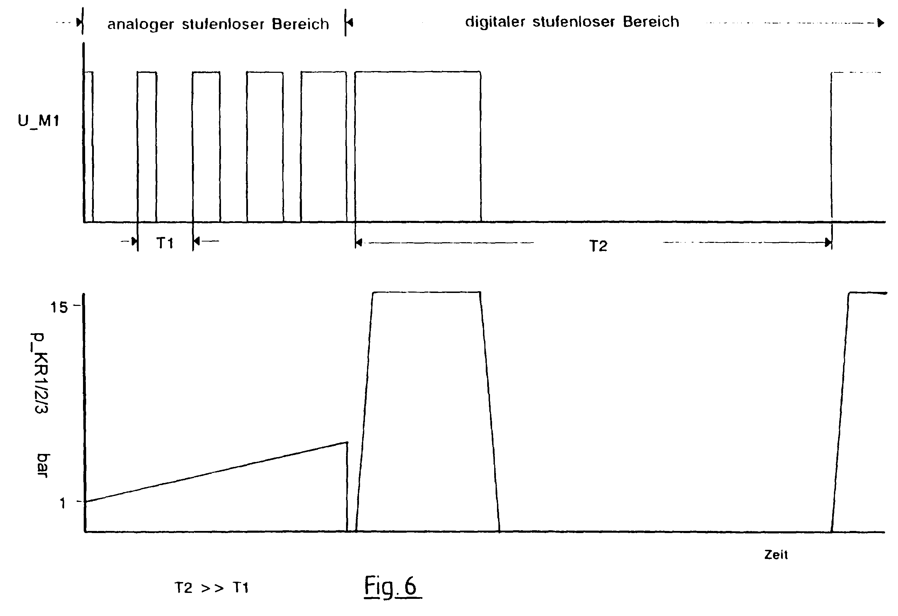

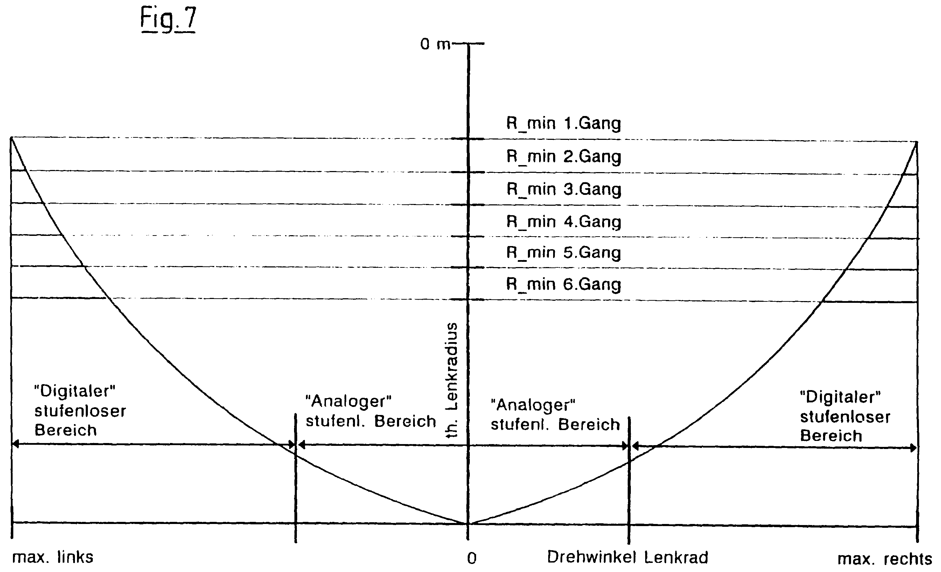

Die Kupplung KR1/2/3 ist thermisch so ausgelegt, daß sie einen stufenlosen Bereich in gewissen Grenzen über Schlupf erzeugen kann. Liegt der Sollkurvenradius in diesem Bereich, wird der Druck in der Kupplung KR1/2/3 durch Pulsweitenmodulation so weit innerhalb der zulässigen Druckgrenze in Abhängigkeit der Kupplungsdifferenzdrehzahl hochgefahren, bis der Sollkurvenradius dem Istkurvenradius - gemessen über der Abtriebsdrehzahl des Lenkgetriebes und der Abtriebsdrehzahl des Fahrgetriebes - entspricht. Dargestellt ist dies in den Fig. 6 und 7.

Digitaler stufenloser Lenkbereich

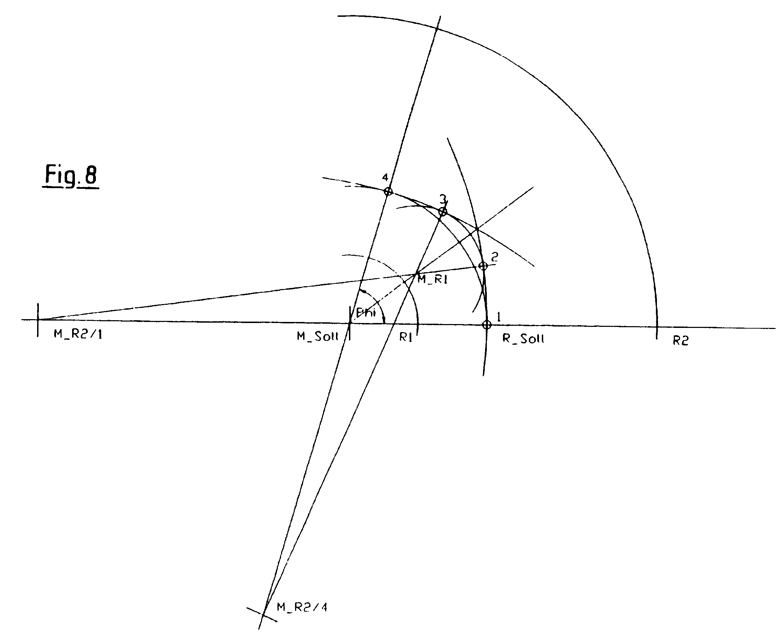

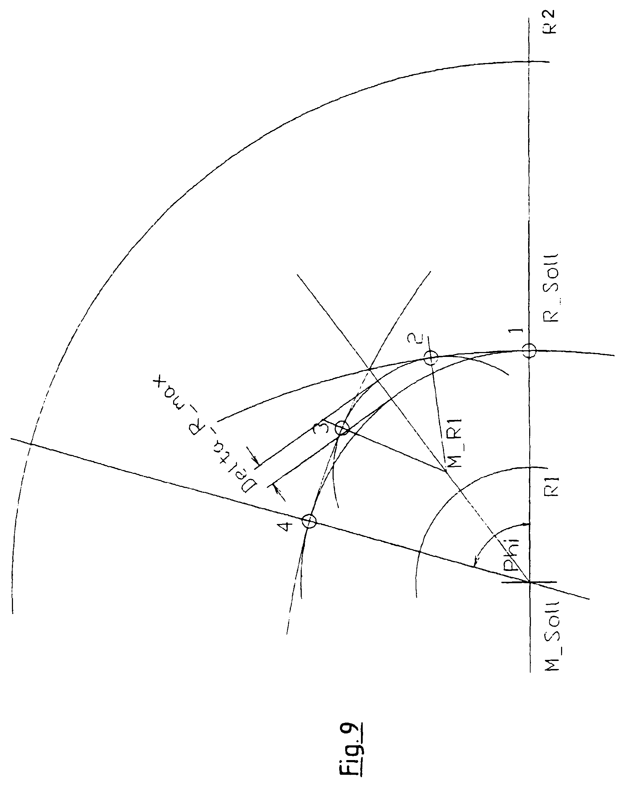

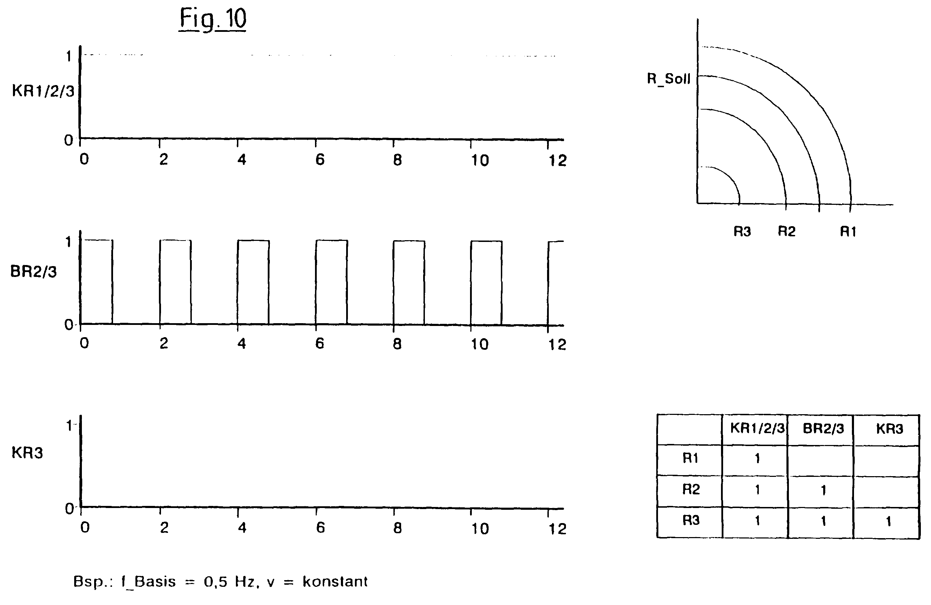

Liegt der gewünschte Kurvenradius auf einem kleineren Radius als er durch den analogen stufenlosen Lenkbereich erreichbar ist, so wird die nachfolgende Lenkstrategie angewandt. Aus der Information des Sollkurvenradius und der festen vom Lenkgetriebe verfügbaren Radien wird von der elektronischen Steuerung berechnet, mit welchen Teilkurvenradien aus den benachbarten Festradien der Sollkurvenradius mit der kleinsten zulässigen vorgegebenen Kurvenradiusabweichung erreicht werden kann. Eine derartige Näherung ist in den Fig. 8 und 9 dargestellt. Hier soll das Kettenfahrzeug einen Kurvenradius, welcher zwischen den vom Lenkgetriebe zur Verfügung gestellten Festradien R1 und R2 liegt, beginnend am Punkt 1 mit dem Radius R_Soll um den Mittelpunkt M_Soll fahren, wobei die maximale Abweichung vom Sollradius delta_R_max nicht überschritten werden darf. Die elektronische Steuerung berechnet nun für die maximal zulässige Kurvenradiusabweichung delta_R_max die Weganteile für Festradien des Lenkgetriebes und steuert die entsprechenden Lenkgetriebekupplungen bzw. Bremse an. Die Festradien werden dabei aus der Beziehung $R\_th = K * n\_Ab\_Fahr\ getr/n\_Ab\_Lenkgetr$ geöffnet. Da das Verhältnis n_Ab_Fahrgetr/n_Ab_Lenkgetr und damit der theoretische Festradius sich aufgrund einer offenen Wandlerkupplung ändern kann, wird der zu Beginn des Wegintervalls gemessene Schlupf in der Abtriebsdrehzahl des Fahrgetriebes über die Wegstrecke von Punkt 1 nach Punkt 4 als konstant angenommen (Fig. 10).

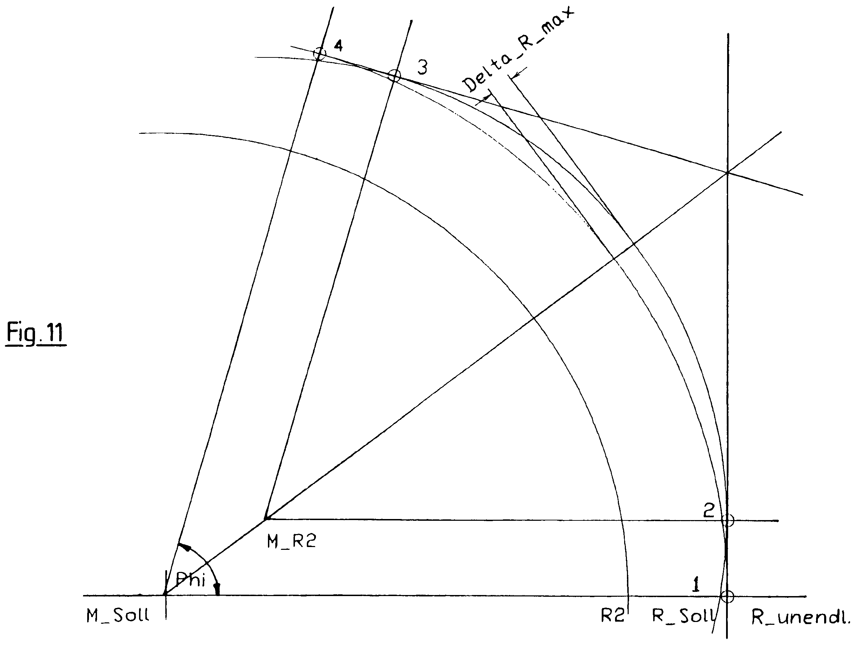

Diese Strategie wird auch in den Fällen angewandt, bei denen der Sollkurvenradius kleiner als der über das analoge Verfahren erreichbare Kurvenradius und größer als der größte feste Kurvenradius ist, wie es in Fig. 11 dargestellt ist.

Die maximale Kurvenradiusabweichung ist eine Funktion der Schaltfrequenz der Lenkgetriebekupplungen. Die minimal erzielbare Kurvenradiusabweichung delta_R_max wird dabei durch die thermische Kupplungsbeanspruchung des Lenkgetriebes begrenzt. Das bedeutet wiederum, daß die Schaltfrequenz der Kupplungen so begrenzt werden muß, daß sie im Rahmen der Schaltfrequenz liegt, wie sie heute bei der manuellen Steuerung üblich ist.

Bei kleinen Sollkurvenradien kann es vorkommen, daß insbesondere im Schubbetrieb bei offener Wandlerkupplung die Motordrehzahl und damit die Lenkgetriebeantriebsdrehzahl im Verhältnis zur Schaltgetriebeabtriebsdrehzahl zu gering ist, um den Sollkurvenradius zu realisieren. In diesem Fall wird von der Lenkgetriebesteuerung mit dem Signal "Anforderung n_An_Lenk" bei der Fahrgetriebesteuerung ein Schließen der Wandlerkupplung bzw. eine Rückschaltung im Fahrgetriebe angefordert (siehe Fig. 4).

Wenden um die Hochachse (Pivot)

Beim Fahrmanöver Pivot wird der digitale Bereich abgeschaltet, da keine Überlagerungsdrehzahl vom Fahrgetriebe vorhanden ist. D. h. die Ansteuerung der Lenkgetriebekupplungen erfolgt konventionell über den Lenksteuerschieber. Damit ist eine stufenlose Drehgeschwindigkeit des Fahrzeuges über die Lenkradvorgabe nur im analogen Bereich verfügbar.

Um für eine Sicherheit bei eventuellen elektrischen Störungen zu sorgen, ist das Steuerungssystem so aufgebaut, daß parallel zur elektronischen Ansteuerung der Lenkgetriebekupplungen der hydraulische Lenksteuerschieber mechanisch mitangesteuert wird und durch die Ventile 12, 22 und 32, welche durch das Magnetventil M0 geschaltet werden, von den Lenkgetriebekupplungen getrennt ist. Somit ist gewährleistet, daß bei einer elektrischen Störung durch Abschaltung von Magnetventil M0 die Kontrolle des Lenkgetriebes automatisch vom hydraulischen Lenksteuerschieber übernommen wird. Die elektronische Steuerung ist wiederum so aufgebaut, daß sie sich selbst laufend durch Plausibilitätskriterien überprüft (Fig. 3).

Bei Störungen in der elektronischen Getriebesteuerung wird mit dem Signal "Umschalt.Notlenk" mit der elektronischen Fahrgetriebesteuerung ein kurzzeitiges Öffnen der Wandlerkupplung angefordert, um einen eventuellen Kurvenradiussprung bei der Umschaltung in den Notlenkbetrieb zu minimieren (Fig. 4).

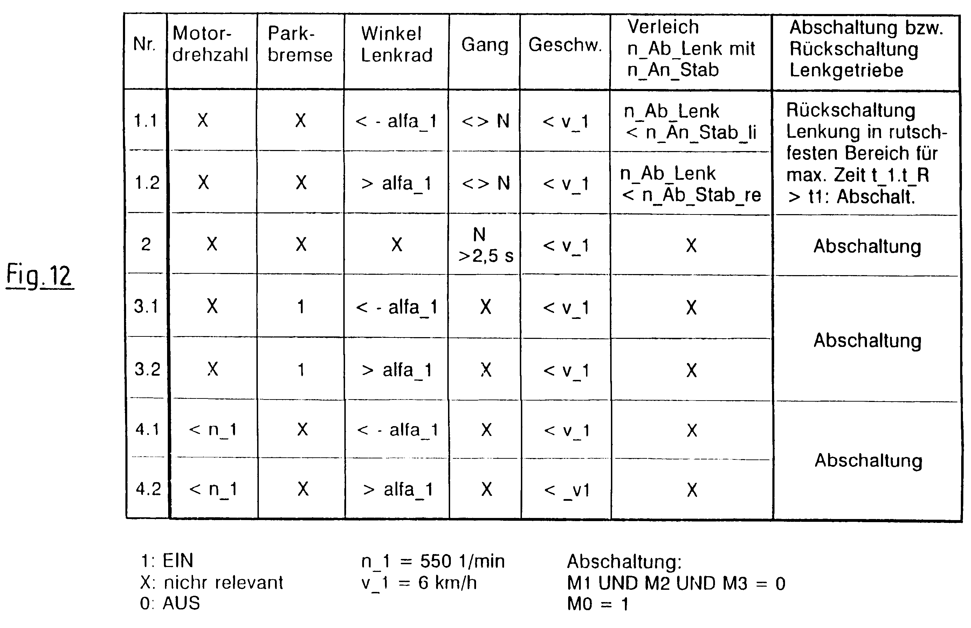

Einer Überlastung des Lenkgetriebes wird dadurch vorgebeugt, daß die Kupplungen des Lenkgetriebes so ausgelegt sind, daß bei einer Drehmomentüberlastung des Lenkgetriebes die entsprechende Stabilisierungskupplung durchrutscht. Diese Stabilisierungskupplungen werden bei kleinen Geschwindigkeiten - bei denen der Drehpunkt theoretisch zwischen den Ketten liegen kann und es wegen sehr hoher Wendewiderstände zu Überlastungen kommen kann - laufend auf Schlupf überprüft. Wird Schlupf erkannt, schaltet die elektronische Steuerung des Lenkgetriebes zunächst in einen rutschfesten Bereich, so daß bei festgefahrenem Fahrzeug das Drehmoment zunächst an den Ketten erhalten bleibt. Nach Ablauf einer fest eingestellten Zeit wird das Lenkgetriebe durch die Lenkgetriebesteuerung über Ansteuerung Magnetventil M0 und Spannungsfreischaltung der Magnetventile M1, M2 und M3 abgeschaltet. Eine entsprechende Darstellung der Abschaltungsbedingungen ist in der Fig. 12 gezeigt. Der Lenkradwinkel "alpha_1" bezieht sich auf einen Lenkradwinkel der sicherstellt, daß sich der Arbeitsbereich des Lenkgetriebes im dauerrutschfesten Bereich befindet. Die in Fig. 12 dargestellten Abschaltbedingungen Lenkgetriebeabsicherung sind als UND-Verknüpfung der verschiedenen Eingangsgrößen zu interpretieren. Durch die Eingangsgröße "Geschwindigkeit" wird sichergestellt, daß die Absicherungseinrichtung nur bei sehr kleinen Geschwindigkeiten auf "stand-by" geschaltet wird, bei der das Lenkgetriebe prinzipiell einer Überlastungsgefahr ausgesetzt sein kann. Aus allgemeinen Sicherheitsbetrachtungen wird das Lenkgetriebe ebenfalls bei Neutralstellung des Fahrschalters für das Fahrgetriebe nach Ablauf von ca. 2,5 Sekunden abgeschaltet. Falls der Fahrer mit eingelegter Feststellbremse losfährt, wird beim Überfahren des Lenkradwinkels "alpha_1" das Lenkgetriebe ebenfalls abgeschaltet. Da primärseitig angetriebene Lenkgetriebe direkt vom Motor angetrieben werden, kann der Motor bei Panikbremsung mit betätigter Lenkung, bei der die Ketten blockieren, abgewürgt werden. Dies kann verhindert werden, indem das Lenkgetriebe beim Unterfahren einer bestimmten Motordrehzahl "n_1" abgeschaltet wird.

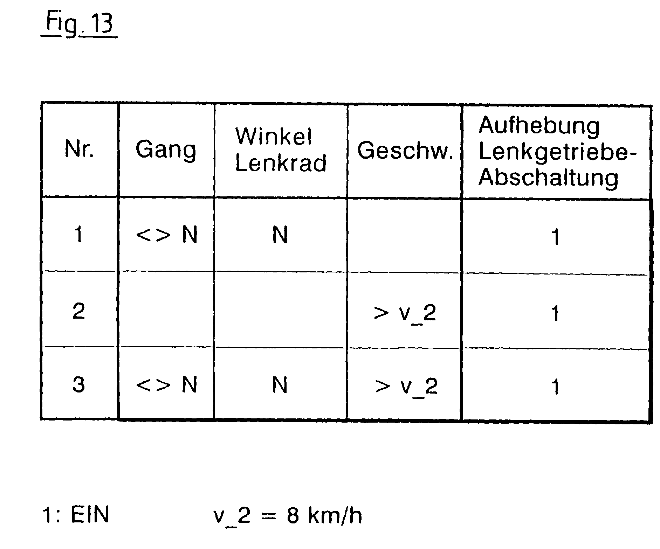

Fig. 13 zeigt die Reset-Bedingungen der Lenkgetriebeabsicherung, die in Abhängigkeit der Stellung des Gangwahlhebels, der Lenkradstellung und der Fahrgeschwindigkeit erfolgt. Mit der Eingangsgröße Geschwindigkeit wird auf jeden Fall sichergestellt, daß das Lenkgetriebe bei Überschreitung einer bestimmten Fahrzeuggeschwindigkeit "v_2" zugeschaltet wird.

Ein erfindungsgemäßes Überlagerungslenkgetriebe zur Lenkung eines Kettenfahrzeuges beinhaltet somit mindestens zwei feste mechanische Übersetzungen, die entsprechend mindestens zwei Kurvenradien bewirken; eine automatische Lenkradienumschaltung zwischen den festen Übersetzungen (festen Lenkradien); eine Vorrichtung zur Eingabe eines gewünschten Lenkradius durch den Fahrer; eine Steuereinheit, die entsprechend der Lenkradiusvorgabe des Fahrers zwischen einer Vielzahl der festen Lenkradien umschaltet und den gewünschten Lenkradius annähert.

Vorteilhaft kann sein, wenn das Überlagerungslenkgetriebe zusätzlich einen direkt stufenlosen Lenkbereich für große Radien besitzt und von der Steuerung, je nach vorgegebenem Kurvenradius, zwischen direkt stufenlosem Lenkbereich und abgestuftem Lenkbereich umgeschaltet wird.

Eine vorteilhafte Ausführung des Überlagerungslenkgetriebes kann beispielsweise drei feste Übersetzungen haben.

Vorteilhaft ist auch, wenn in der Steuerung ein Mikroprozessor vorgesehen ist, der mit Hilfe eines entsprechenden Programms den gewünschten Kurvenradius aus einer Vielzahl benachbarter, fester Kurvenradien bei Einhaltung einer vorgegebenen maximalen Abweichung berechnet und das Lenkgetriebe ansteuert. Möglich ist hierbei auch, daß eine Optimierung bezüglich einer minimalen Anzahl von Schaltvorgängen vorgenommen wird.

Weiterhin kann es vorteilhaft sein, wenn die Kupplungen und/oder Bremsen im Lenkgetriebe so ausgelegt sind, daß bei Überlast nur die Stabilisierungskupplungen durchrutschen können.

Ebenfalls günstig ist ein Überlagerungslenkgetriebe, welches zur Betätigung der Kupplungen eine geschwindigkeitsabhängige Grundfrequenz für die Pulsweitenmodulation im Bereich des digitalen Lenkens verwendet. Hierdurch besteht eine konstante Schaltfrequenz der Kupplungen, bezogen auf den zurückgelegten Weg, das heißt, die maximale Abweichung vom theoretischen Kurvenverlauf ist damit von der Fahrgeschwindigkeit unabhängig.

Vorteilhaft ist auch ein Überlagerungslenkgetriebe, das eine Schlupfüberwachung der Stabilisierungskupplungen mit einer Abschaltung des Lenkgetriebes über die Magnetventile der Radienkupplungen oder mit einer Umschaltung in den stufenlosen Bereich des ersten Radius vorsieht.

Ebenfalls kann vorteilhaft sein, bei dem Überlagerungslenkgetriebe eine Abschaltung des Lenkgetriebes nach Ablauf einer vorgegebenen Zeit nach der Rückschaltung in den rutschfesten Bereich vorzusehen.

Weiterhin ist es vorteilhaft, wenn das Überlagerungslenkgetriebe einen mechanisch betätigten hydraulischen Lenksteuerschieber vorsieht, der immer mitgeführt wird und bei Störungen in der elektronischen Steuerung automatisch die Kontrolle über das Lenkgetriebe an diesen hydraulischen Lenksteuerschieber übergeben wird. Dadurch besteht auch bei Ausfall der Elektronik weiterhin gute Einsatzfähigkeit (Notlenkbereich). Hier ist es sinnvoll, wenn ein auftretender Kurvenradiussprung beim Umschalten in den Notlenkbereich dadurch minimiert wird, daß kurzzeitig die Wandlerkupplung geöffnet wird.

Das erfindungsgemäße Überlagerungslenkgetriebe eignet sich sowohl für einen primärseitigen (motorseitigen) Antrieb, als auch für einen sekundärseitigen (abtriebsseitigen) Antrieb.

Bezugszeichen

| | |
|---|---|
| 11 | Steuerventil |
| 12 | Steuerventil |
| 21 | Steuerventil |
| 22 | Steuerventil |
| 31 | Steuerventil |
| 32 | Steuerventil |
| alpha_1 | Lenkradwinkel |
| BR2/3 | Bremse |
| delta_R_max | maximal zulässige Kurvenradiusabweichung |
| KR1/2/3 | Lenkgetriebekupplung |
| KR3 | Lenkgetriebekupplung |
| M0 | Magnetventil |
| M1 | Magnetventil |
| M2 | Magnetventil |
| M3 | Magnetventil |
| M_soll | Mittelpunkt |
| n_1 | Motordrehzahl |

| | |
|---|---|
| R1 | Festradius |
| R2 | Festradius |
| R_soll | Radius |
| Stab_li | Stabilisierungskupplung |
| Stab_re | Stabilisierungskupplung |
| v_2 | Fahrzeuggeschwindigkeit |

**Patentansprüche**

1. Überlagerungslenkgetriebe zur Lenkung eines Kettenfahrzeuges mit mindestens zwei festen mechanischen Übersetzungsstufen, die entsprechend mindestens zwei feste Lenkradien (R1, R2) bewirken, einer Vorrichtung zur Eingabe eines gewünschten Lenkradius (R_soll) durch den Fahrer, einer Steuerung, die automatisch zwischen den festen Lenkradien umschaltet und den gewünschten Lenkradius annähert, dadurch gekennzeichnet, daß die Steuerung eine elektronische Steuerung mit einem Mikroprozessor und einem Programm ist, mit der der gewünschte Lenkradius (R_soll) aus benachbarten festen Lenkradien bei Einhaltung einer vorgegebenen maximalen Abweichung (delta_R_max) berechenbar ist, und der gewünschte Lenkradius durch eine Vielzahl von Bogensegmenten mit jeweils festen Lenkradien angenähert wird.

2. Überlagerungslenkgetriebe nach Anspruch 1, dadurch gekennzeichnet, daß eine Kupplung (KR1/2/3) im Lenkgetriebe vorgesehen ist, welche mit gezieltem Schlupf betrieben werden kann, wodurch ein stufenloser Lenkbereich für große Lenkradien („analoger" Bereich) ermöglicht ist, und von der elektronischen Steuerung, je nach vorgegebenem Lenkradius (R_soll), zwischen stufenlosem Lenkbereich für große Lenkradien und einem abgestuften Lenkbereich („digitaler" Bereich") umgeschaltet wird.

3. Überlagerungslenkgetriebe gemäß einem der Ansprüche 1 oder 2, dadurch gekennzeichnet, daß drei feste Übersetzungsstufen vorgesehen sind.

4. Überlagerungslenkgetriebe gemäß einem der Ansprüche 1 bis 3, dadurch gekennzeichnet, daß Stabilisierungskupplungen (Stab_li, Stab_re) vorgesehen sind, welche bei Überlast durchrutschen können.

5. Überlagerungslenkgetriebe gemäß einem der Ansprüche 1 bis 4, dadurch gekennzeichnet, daß Kupplungen oder Bremsen (KR1/2/3, KR3, BR2/3) vorgesehen sind, die mit einer Schaltfrequenz (f_Basis) betätigbar sind, und daß diese Schaltfrequenz Fahrgeschwindigkeitsabhängig ist.

6. Überlagerungslenkgetriebe nach einem der Ansprüche 1 bis 5, dadurch gekennzeichnet, daß Drehzahlsensoren am Lenkgetriebeeingang, an der Eingangswelle für die Stabilisierungskupplungen (Stab_li, Stab_re) links und rechts sowie am Lenkgetriebeabtrieb vorgesehen sind, die zur Schlupfüberwachung der Stabilisierungskupplungen dienen.

7. Überlagerungslenkgetriebe nach Anspruch 6, dadurch gekennzeichnet, daß Magnetventile (M0, M1, M2, M3) vorgesehen sind, mit denen das Lenkgetriebe bei Schlupf in einer Stabilisierungskupplung (Stab_li, Stab_re) abschaltbar ist.

8. Überlagerungslenkgetriebe nach Anspruch 6 oder 7, dadurch gekennzeichnet, daß das Lenkgetriebe bei Schlupf in einer Stabilisierungskupplung (Stab_li, Stab_re) in den stufenlosen Lenkbereich für große Lenkradien („analoger" Bereich) umschaltbar ist.

9. Überlagerungslenkgetriebe nach Anspruch 7, dadurch gekennzeichnet, daß das Lenkgetriebe bei Schlupf zunächst in einen rutschfesten Bereich schaltbar ist und nach Ablauf einer fest eingestellten Zeit abschaltbar ist.

10. Überlagerungslenkgetriebe gemäß einem der Ansprüche 1 bis 9, dadurch gekennzeichnet, daß zusätzlich ein mechanisch betätigter, hydraulischer Lenksteuerschieber vorgesehen ist, der das Lenkgetriebe automatisch kontrolliert, wenn bei Störungen in der elektronischen Steuerung in den Notlenkbetrieb umgeschaltet wird.

11. Überlagerungslenkgetriebe gemäß Anspruch 10, dadurch gekennzeichnet, daß eine Wandlerkupplung vorgesehen ist, die beim Umschalten in den Notlenkbereich kurzzeitig geöffnet wird, wodurch ein Lenkradiussprung minimiert wird.

**12.** Überlagerungslenkgetriebe gemäß einem der Ansprüche 1 bis 11, dadurch gekennzeichnet, daß es für einen primärseitigen Antrieb vorgesehen ist.

**13.** Überlagerungslenkgetriebe gemäß einem der Ansprüche 1 bis 12, dadurch gekennzeichnet, daß es für einen sekundärseitigen Antrieb vorgesehen ist.

**Claims**

**1.** Superimposed steering mechanism for steering a tracked vehicle having at least two fixed mechanical transmission steps which correspondingly effect at least two fixed steering radii (R1, R2), a device for entering a desired steering radius (R_soll) by the driver, and a control system which automatically switches between the fixed steering radii and approximates the desired steering radius, characterized in that the control system is an electronic control system which has a microprocessor and a program, and with which the desired steering radius (R_soll) can be calculated from adjacent fixed steering radii while maintaining a specified maximum deviation (delta_R_max), and the desired steering radius is approximated by a multiplicity of arc segments having respective fixed steering radii.

**2.** Superimposed steering mechanism according to Claim 1, characterized in that a clutch (KR1/2/3) is provided in the steering mechanism which can be operated with a controlled slip, as a result of which an infinitely variable steering range ("analog" range) is made possible for large steering radii, and switching is carried out by the electronic control system, depending on the specified steering radius (R_soll), between the infinitely variable steering range for large steering radii and a stepped steering range ("digital" range).

**3.** Superimposed steering mechanism according to one of Claims 1 or 2, characterized in that three fixed transmission steps are provided.

**4.** Superimposed steering mechanism according to one of Claims 1 to 3, characterized in that stabilization clutches (Stab_li, Stab_re) are provided which can slip in the event of overload.

**5.** Superimposed steering mechanism according to one of Claims 1 to 4, characterized in that clutches or brakes (KR1/2/3, KR3, BR2/3) are provided which can be actuated with a switching frequency (f_Basis) and in that said switching frequency is dependent on driving speed.

**6.** Superimposed steering mechanism according to one of Claims 1 to 5, characterized in that rotational speed sensors are provided at the steering mechanism input, at the input shaft for the left and right stabilization clutches (Stab_li, Stab_re) and also at the steering mechanism output, which rotational speed sensors serve to monitor slip in the stabilization clutches.

**7.** Superimposed steering mechanism according to Claim 6, characterized in that solenoid valves (M0, M1, M2, M3) are provided with which the steering mechanism can be switched off in the event of slip in a stabilization clutch (Stab_li, Stab_re).

**8.** Superimposed steering mechanism according to Claim 6 or 7, characterized in that the steering mechanism can be switched to the infinitely variable steering range for large steering radii ("analog" range) in the event of slip in a stabilization clutch (Stab_li, Stab_re).

**9.** Superimposed steering mechanism according to Claim 7, characterized in that the steering mechanism can first be switched into a slip-resistant range in the event of slip and can be switched off after the expiry of a fixed time.

**10.** Superimposed steering mechanism according to one of Claims 1 to 9, characterized in that, in addition, a mechanically actuated, hydraulic steering control valve is provided which automatically monitors the steering mechanism if switching to the emergency steering operation is carried out in the event of malfunctions in the electronic control system.

**11.** Superimposed steering mechanism according to Claim 10, characterized in that a lock-up clutch is provided which is opened for a short time during switching to the emergency steering range, as a result of which an abrupt change in steering radius is minimized.

**12.** Superimposed steering mechanism according to one of Claims 1 to 11, characterized in that it is provided for a primary-side mechanism.

**13.** Superimposed steering mechanism according to one of Claims 1 to 12, characterized in that it is provided for a secondary-side mechanism.

## Revendications

**1.** Boîte de direction à superposition pour la direction d'un véhicule à chenilles comportant au moins deux paliers de transmission mécanique fixe ayant pour effet au moins deux rayons de direction fixes (R1, R2), un dispositif pour l'entrée d'un rayon de direction souhaité (R_soll) par le conducteur, une commande effectuant automatiquement la commutation entre les rayons de direction fixes et l'approximation au rayon de conduite souhaité, caractérisée en ce que la commande est une commande électronique avec un microprocesseur et un programme permettant de calculer le rayon de direction souhaité (R_soll) à partir de rayons de direction fixes voisins en respectant un écart maximal prédéfini (delta_R_max), le rayon de direction souhaité étant approché par une multitude de segments d'arc ayant chacun des rayons de direction fixes.

**2.** Boîte de direction à superposition selon la revendication 1, caractérisée en ce qu'un embrayage (KR1/2/3) est prévu dans la boîte de direction, lequel peut être mis en oeuvre avec glissement rationnel permettant de ce fait une zone de direction progressive pour les grands rayons de direction (zone《 analogique 》), la commande électronique commutant selon le rayon de direction prédéfini (R_soll) entre la zone de direction progressive pour les grands rayons de direction et une zone de direction par paliers (zone《 numérique 》).

**3.** Boîte de direction à superposition selon l'une des revendications 1 ou 2, caractérisée en ce que trois paliers de transmission fixes sont prévus.

**4.** Boîte de direction à superposition selon l'une des revendications 1 à 3, caractérisée en ce que des embrayages de stabilisation (Stab_li, Stab_re) sont prévus, lesquels peuvent passer par glissement en cas de surcharge.

**5.** Boîte de direction à superposition selon l'une des revendications 1 à 4, caractérisée en ce que des embrayages ou freins (KR1/2/3, KR3, BR2/3) sont prévus lesquels peuvent être actionnés à une fréquence de commande (f_Basis), et en ce que cette fréquence de commande dépend de la vitesse de déplacement.

**6.** Boîte de direction à superposition selon l'une des revendications 1 à 5, caractérisée en ce que des détecteurs de vitesse de rotation sont prévus à l'entrée de la boîte de direction, sur l'arbre d'entrée pour les embrayages de stabilisation (Stab_il Stab_re) à gauche et à droite, ainsi qu'à la sortie de la boîte de direction qui servent à la surveillance de glissement des embrayages de stabilisation.

**7.** Boîte de direction à superposition selon la revendication 6, caractérisée en ce que des électrovannes (M0, M1, M2, M3) sont prévues, avec lesquelles il est possible de désaccoupler la boîte de direction en cas de glissement dans un embrayage de stabilisation (Stab_il, Stab_re).

**8.** Boîte de direction à superposition selon la revendication 6 ou 7, caractérisée en ce que la boîte de direction, en cas de glissement dans un embrayage de stabilisation (Stabl_il Stab_re), peut être commutée dans la zone de direction progressive pour les grands rayons de direction (zone《 analogique》).

**9.** Boîte de direction à superposition selon la revendication 7, caractérisée en ce que la boîte de direction, en cas de glissement, peut être d'abord commutée dans une zone sans glissement et peut ensuite être désaccouplée après l'écoulement d'une durée fixe.

**10.** Boîte de direction à superposition selon l'une des revendications 1 à 9, caractérisée en ce qu'un tiroir de commande hydraulique à actionnement mécanique est prévu en complément, lequel contrôle la boîte de direction automatiquement lorsqu'en cas de perturbations dans la commande électronique, la direction est commutée en fonctionnement de secours.

**11.** Boîte de direction a superposition selon la revendication 10, caractérisée en ce qu'un convertisseur semi-automatique est prévu qui, lors de la commutation dans la zone de direction de secours, est ouvert pour un court moment, ce qui minimise un saut de rayon de direction.

**12.** Boîte de direction à superposition selon l'une des revendications 1 à 11, caractérisée en ce qu'elle est prévue pour un entraînement côté primaire.

**13.** Boîte de direction à superposition selon l'une des revendications 1 à 12, caractérisée en ce qu'elle est prévue pour un entraînement côté secondaire.

Fig.1

Kst.L     K1.2.3     B2.3     K3     Kst.R

EP 0 832 025 B1

## Fig. 2

Fig. 3

hydr. Lenksteuerschieber

Stab_li

12

11

KR1/2/3

22

21

BR2/3

32

31

KR3

Stab_re

M0

M1

M2

M3

P

EP 0 832 025 B1

**Elektron. Getr.-Steuerung**

Logik Lenkgetr.

Logik Fahrgetr.

n_Ab_Getr.

Anforderung
n_An_Lenk

Pivot

Umschalt Notlenk

Warnlampe

Parkbremse

Lenksig. (analog)

U_Radius_1

U_Radius_2

U_Radius_3

n_An_Lenk

n_An_Stab_li

n_An_Stab_re

n_Ab_Lenk

U_Sicher

Fahrschalter N

Signale Fahrgetr.

Lenkung (mech.)

hydr. Lenkst.

Lenkgetriebe

Fahrgetriebe

Fig.4

EP 0 832 025 B1

Fig.5

R_min 1.Gang

R_min 2.Gang

R_min 3.Gang

R_min 4.Gang

R_min 5.Gang

R_min 6.Gang

0 m

th. Lenkradius

max. links          0          Drehwinkel Lenkrad          max. rechts

EP 0 832 025 B1

EP 0 832 025 B1

analoger stufenloser Bereich | digitaler stufenloser Bereich

U_M1

T1

T2

p_KR1/2/3   bar

15 –

1 –

Zeit

T2 >> T1

Fig. 6

Fig.7

R_min 1.Gang
R_min 2.Gang
R_min 3.Gang
R_min 4.Gang
R_min 5.Gang
R_min 6.Gang

0 m

th. Lenkradius

"Digitaler" stufenloser Bereich

"Analoger" stufenl. Bereich

"Analoger" stufenl. Bereich

"Digitaler" stufenloser Bereich

max. rechts

Drehwinkel Lenkrad

0

max. links

Fig. 8

EP 0 832 025 B1

Fig. 9

## Fig.10

| | KR1/2/3 | BR2/3 | KR3 |
|---|---|---|---|
| R1 | 1 | | |
| R2 | 1 | 1 | |
| R3 | 1 | 1 | 1 |

Bsp.: f_Basis = 0,5 Hz, v = konstant

Fig.11

Fig.12

| Nr. | Motor-drehzahl | Park-bremse | Winkel Lenkrad | Gang | Geschw. | Verleich n_Ab_Lenk mit n_An_Stab | Abschaltung bzw. Rückschaltung Lenkgetriebe |
|---|---|---|---|---|---|---|---|
| 1.1 | X | X | < - alfa_1 | <> N | < v_1 | n_Ab_Lenk < n_An_Stab_li | Rückschaltung Lenkung in rutsch-festen Bereich für max. Zeit t_1.t_R > t1: Abschalt. |
| 1.2 | X | X | > alfa_1 | <> N | < v_1 | n_Ab_Lenk < n_Ab_Stab_re | |
| 2 | X | X | X | N >2,5 s | < v_1 | X | Abschaltung |
| 3.1 | X | 1 | < - alfa_1 | X | < v_1 | X | Abschaltung |
| 3.2 | X | 1 | > alfa_1 | X | < v_1 | X | |
| 4.1 | < n_1 | X | < - alfa_1 | X | < v_1 | X | Abschaltung |
| 4.2 | < n_1 | X | > alfa_1 | X | < _v1 | X | |

1: EIN      n_1 = 550 1/min      Abschaltung:
X: nichr relevant      v_1 = 6 km/h      M1 UND M2 UND M3 = 0
0: AUS      M0 = 1

## Fig. 13

| Nr. | Gang | Winkel Lenkrad | Geschw. | Aufhebung Lenkgetriebe-Abschaltung |
|-----|------|----------------|---------|-------------------------------------|
| 1 | <> N | N | | 1 |
| 2 | | | > v_2 | 1 |
| 3 | <> N | N | > v_2 | 1 |

1: EIN         v_2 = 8 km/h

EP 0 832 025 B1